# EUROPEAN PATENT SPECIFICATION

(11) **EP 3 885 649 B1**
(45) Date of publication and mention of the grant of the patent: **09.11.2022**
(21) Application number: 20166201.2
(22) Date of filing: 27.03.2020
(51) Int. Cl.: F21V 33/00, F21V 8/00, F21Y 105/18

(54) **CIRCULAR LIGHT-GUIDING STRUCTURE AND LIGHT-GUIDING DEVICE**
KREISFÖRMIGE LICHTLEITENDE STRUKTUR UND LICHTLEITENDE VORRICHTUNG
STRUCTURE DE GUIDAGE DE LUMIÈRE CIRCULAIRE ET DISPOSITIF DE GUIDAGE DE LUMIÈRE

(43) Date of publication of application: 29.09.2021
(73) Proprietor: Arcadyan Technology Corporation, Hsinchu City 30071 (TW)
(72) Inventor: Wu, Chin Yi, 30071 Hsinchu City (TW); Chen, Sheng Chung, 30071 Hsinchu City (TW)
(74) Representative: Gee, Steven William

(56) References cited:
- WO-A1-2011/116531
- KR-A- 20100 088 951
- KR-A- 20130 124 923
- KR-B1- 101 660 010
- US-A1- 2006 268 564
- US-A1- 2007 127 227
- US-B1- 10 094 970

## Description

### BACKGROUND OF THE INVENTION

### 1. Field of the Invention

The present invention relates generally to a circular light-guiding structure and light-guiding device, and more particularly, to a circular light-guiding structure and light-guiding device capable of making a light circle uniformly emitting light with a small number of light-emitting diodes.

### 2. The Prior Arts

The light-emitting diode has the following advantages: (1) high conversion efficiency of converting electrical energy into light energy to save power; (2) short reaction time, able to achieve high flashing frequency; (3) long lifespan, and not affected by continuous flicker; (4) solid-state component, there are no components such as filaments and glass covers, and able to withstand more mechanical impacts than fluorescent and incandescent lamps; (5) small volume; (6) easy to focus; and (7) strong monochrome. The light-emitting diode has become a very popular light source due to the above advantages.

Many electronic devices, such as a router or smart speaker, require a light-guiding device for decorative purposes. The light-guiding device generally comprises a top cover, a light-guiding structure, a substrate, a plurality of light-emitting diodes and an outer cover. The top cover is disposed above the light-guiding structure, and most of the top surface of the light-guiding structure is shielded by the top cover, with only the outer light circle not covered by the top cover. The substrate is disposed at the bottom of the light-guiding structure. The plurality of light-emitting diodes are disposed on the substrate to project light through the light-guiding structure and emitted outward from the light circle. In general, the number of light-emitting diodes is about eight to twenty-four to be sufficient for the entire light circle to emit light evenly. The top cover, the light-guiding structure and the substrate are all disposed inside the outer cover, and the top cover and the light circle of the light-guiding structure are exposed outside of the outer cover.

However, the configuration of eight to twenty-four light-emitting diodes will increase the cost of the light-guiding device, increase the power consumption, and occupy an excessive area of the substrate, resulting in reducing the available area of the substrate.

Furthermore, in the conventional light-guiding device, only the top cover and the substrate provide light-shielding effect, so that light will not be emitted from therein. However, the inner peripheral side and the outer peripheral side of the light-guiding structure have no light-shielding effect, so that part of the light is projected inward from the inner peripheral side of the light-guiding structure and projected outward from the outer peripheral side of the light-guiding structure, leading to a reduced amount of light projected outward from the top cover of the light-guiding structure, resulting in insufficient brightness of the light circle.

WO 2011/116531 A1 discloses a shading plate, a light shaping device and an electronic apparatus with the light shaping device. The electronic apparatus with a light shaping device includes a housing, a light bracket, a spot light sources lighting plate with a plurality of spot light sources, a light guiding plate, a shading plate and a shading top cover. The shading plate defines a plurality of transmission cavities with a circumferential distribution by shading walls. Each spot light source is respectively mounted at the light inlet of each transmission cavity, and faces to the light outlet. A plurality of light guiding parts of the light guiding plate are matched in the transmission cavities respectively.

US 2006/268564 A1 discloses a lighting or signaling device with improved appearance for a motor vehicle. The lighting or signaling device for a motor vehicle includes a light source and a light guide associated with the light source, the light rays issue from the light source entering the light guide through an entry face and propagate in the light guide in order to emerge therefrom substantially parallel to a general direction of emission through an exit face. The guide includes at least one internal intermediate wall or a lateral wall on which the light rays undergo at least one total reflection.

### SUMMARY OF THE INVENTION

A primary objective of the present invention is to provide a circular light-guiding structure and a light-guiding device, in the case of using a small number of light-emitting diodes, able to evenly emit the entire light circle, effectively reducing the number of light-emitting diodes, reducing the cost, saving the power, and increasing the available area of the substrate.

Another object of the present invention is to provide a circular light-guiding structure and a light-guiding device, which can provide a good light-shielding effect, reduce the loss of light, and further improve the brightness of the light circle.

For achieving the foregoing objectives, the present invention provides a circular light-guiding structure, according to claim 1.

Preferably, a minimum distance of the light source disposition position of each light source receiving slot to an inner peripheral side of the light-reflecting portion is greater than or equal to 10 mm.

According to the claimed invention, the light source disposition position of each light source receiving slot, an intermediate position of a longitudinal direction of each trench and a position of a minimum distance of an inner peripheral side of the light-reflecting portion are on the same straight line; wherein the light-guiding portion comprises four light source receiving slots and four trenches, the light-guiding portion is partitioned into four light-guiding regions, and one inner peripheral side of each light-guiding region has two planes, and the two planes of each light-guiding region are respectively connected with slot wall of one of the light source receiving slots, and the two planes of each light-guiding region extend in a longitudinal direction and form an angle at intersection, the angles of the four angles are equal and between 165° and 180°, and the adjacent two light-guiding regions form a rounded corner between the two planes.

According to the claimed invention, the direct distance between the two ends of each trench is greater than the width of each light source receiving slot.

Preferably, each of the light source receiving slot has a semi-elliptical shape, a curved shape or a semi-circular shape.

Preferably, each of the trenches has an arc shape, an elongated shape, a U shape or a V shape.

Preferably, the side of each of the microstructures adjacent to each of the light source receiving slots is defined as a light incident side, and an angle between the light incident side and the normal of bottom surface of the light-guiding portion is between 10° and 60°.

Preferably, the longitudinal cross-section of each microstructure has a triangular or semi-circular shape.

According to the claimed invention, the microstructures are divided into four sets of microstructure assembly, each set of microstructure assembly comprises a plurality of microstructures, and a part of microstructures of each set of microstructure assembly are curved concentric structures with different radii centered on the light source disposition position of each light source receiving slot.

Preferably, the light-reflecting surface is chamfered or is a rounded corner.

To achieve the foregoing object, the present invention provides a light-guiding device comprising the above-mentioned circular light-guiding structure, a top cover, a substrate and at least three light-emitting diodes; the top cover being disposed above the light-guiding portion of the circular light-guiding structure and being opaque; the substrate being disposed below the circular light-guiding structure; the at least three light-emitting diodes being disposed on a top surface of the substrate, and respectively located at light source disposition positions of the at least three light source receiving slots.

Preferably, the light-guiding device further comprises a light-shielding member disposed on the substrate, located in the hollow-out portion of the circular light-guiding structure, and having at least three light-shielding portions and at least three connecting portions; each of the light-shielding portions is adjacent to an inner peripheral side of the light-guiding portion between two adjacent light source receiving slots of the circular light-guiding structure, and each connecting portion bypasses one of the light-emitting diodes, and the two ends of the connecting portions are respectively connected to one end of two adjacent light-shielding portions.

Preferably, the height of the light-shielding member relative to the substrate is greater than the height of each of the light-emitting diodes relative to the substrate.

Preferably, each of the light-shielding portions is disposed with a fixing hole, and the light-guiding device further comprises at least three fasteners respectively passing through the fixing holes of the at least three light-shielding portions and being locked to the substrate, the light-shielding member is fixed to the substrate.

Preferably, a light-reflecting layer is disposed on an outer peripheral side of the light-shielding member.

Preferably, a light-shielding layer is disposed on the inner peripheral side of the light-guiding portion.

Preferably, a light-shielding layer is disposed on an outer peripheral side of the light-reflecting portion of the light circle.

Preferably, the light circle further comprises a positioning portion, the positioning portion surrounds an outer peripheral side of an intersection of the light-reflecting portion and the light-emitting portion of the light circle; wherein the light-guiding device further comprises an outer cover; the outer cover is opaque and comprises a side wall and a top wall, the side wall and the top wall of the outer cover together form an accommodating space, the top wall of the outer cover forms an opening, and the opening communicates with the accommodating space; the circular light-guiding structure, the top cover and the substrate are all located in the accommodating space; bottom surface of the top wall of the outer cover abuts against top surface of the positioning portion of the circular light-guiding structure, and top surface of the light-emitting portion of the light circle of the circular light-guiding structure and top surface of the top cover are exposed to the opening.

Preferably, the light-guiding portion further comprises at least three platforms, and the at least three platforms are respectively disposed on a side of the at least three light source receiving slots away from the hollow-out portion; top surface and bottom surface of the at least three platforms are both planar, the at least three trenches are respectively disposed on a side of the at least three platforms away from the at least three light source receiving slots; the substrate has at least three touch portions, and the at least three touch portions are located below the at least three platforms .

Preferably, the two sides of each platform that are in contact with the microstructures respectively are curved.

The effect of the present invention is that the excess light at the center can be effectively dispersed on both sides by the trenches of the light-guiding portion, and the microstructures can effectively diffuse the light and uniformly scatter in the light-guiding portion, thereby in the case of using only three or four light-emitting diodes, the light-emitting portion of the entire light circle can emit light evenly, so as to achieve effectively reducing the number of light-emitting diodes, reducing the cost, saving the power, and increasing the available area of the substrate.

Furthermore, the light-shielding layer on the inner peripheral side of the light-shielding member or the light-guiding portion can achieve good light-shielding effect, reduce the light loss, and further improve the brightness of the light-emitting portion of the light circle. The above technical feature is further companied with a light-shielding layer on the outer peripheral side of the light-reflecting portion of the light circle so that the light-shielding effect is better, the effect of reducing light loss is more remarkable, and the brightness of the light-emitting portion of the light circle is brighter.

### BRIEF DESCRIPTION OF THE DRAWINGS

The present invention will be apparent to those skilled in the art by reading the following detailed description of a preferred embodiment thereof, with reference to the attached drawings, in which:
Fig. 1 is a schematic view of the light-guiding device according to an embodiment of the present invention;
Fig. 2 is an exploded view of the light-guiding device according to an embodiment of the present invention;
Fig. 3 is a schematic view of the circular light-guiding structure according to an embodiment of the present invention;
Fig. 4 is a top view of the circular light-guiding structure according to an embodiment of the present invention;
Fig. 5 is a bottom view of the circular light-guiding structure according to an embodiment of the present invention;
Fig. 6 is a cross-sectional view of the top cover and the circular light-guiding structure according to an embodiment of the present invention;
Fig. 7 is a top view after removing the top cover according to an embodiment of the present invention;
Fig. 8 is a planar schematic view of the light path according to an embodiment of the present invention;
Fig. 9 is a cross-sectional view of the light path according to an embodiment of the present invention;
Fig. 10 is a schematic view of the light refracted by the microstructures according to an embodiment of the present invention;
Fig. 11 is a schematic view of the light circle evenly emitting the light according to an embodiment of the present invention;
Fig. 12 is a schematic view of the plurality of light-emitting diodes emitting light sequentially according to an embodiment of the present invention;
Fig. 13A and Fig. 13B are schematic views of the light source receiving slots according to an embodiment of the present invention;
Fig. 14A to Fig. 14C are schematic views of the trenches according to an embodiment of the present invention;
Fig. 15A and Fig. 15B are schematic views of the microstructures according to an embodiment of the present invention;
Fig. 16 is a schematic view of the light-reflecting surface of the light circle according to an embodiment of the present invention;
Fig. 17 is a schematic view according to another embodiment of the present invention;
Fig. 18 is a schematic view according to yet another embodiment of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

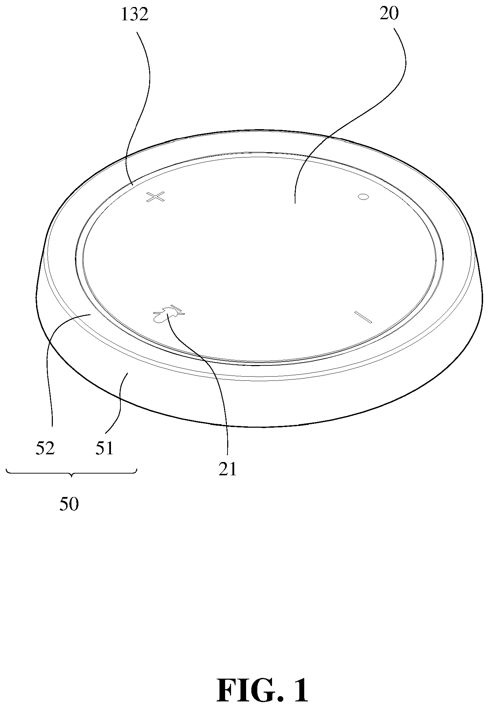

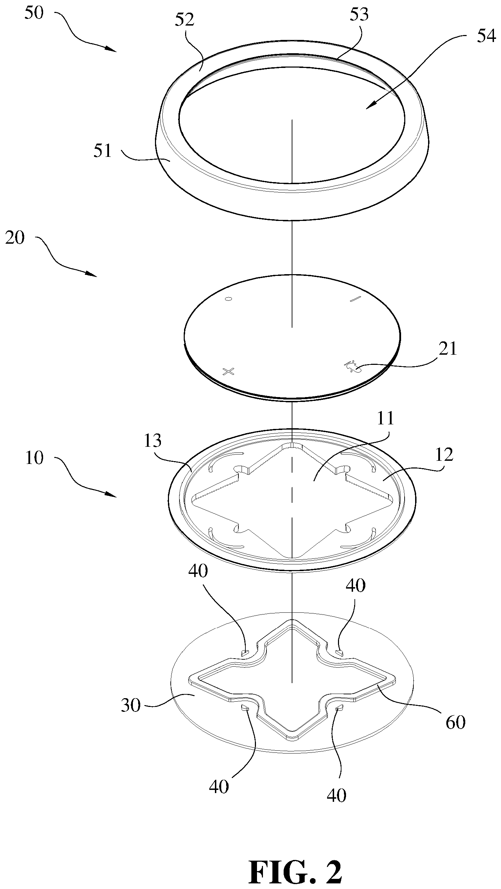

Referring to Fig. 1 and Fig. 2, Fig. 1 is a schematic view of the light-guiding device according to an embodiment of the present invention, and Fig. 2 is an exploded view of the light-guiding device according to an embodiment of the present invention. The present invention provides a light-guiding structure, comprising a circular light-guiding structure 10, a top cover 20, a substrate 30, four light-emitting diodes 40 and an outer cover 50.

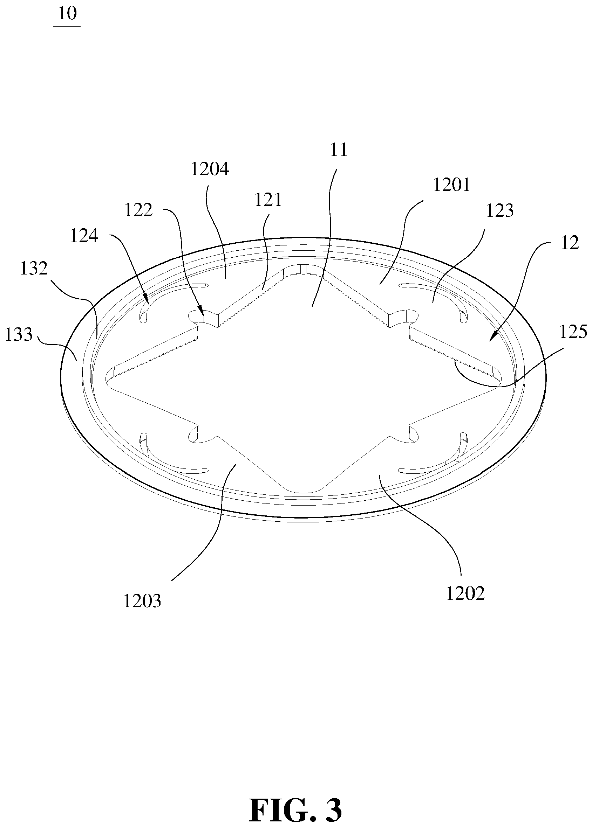

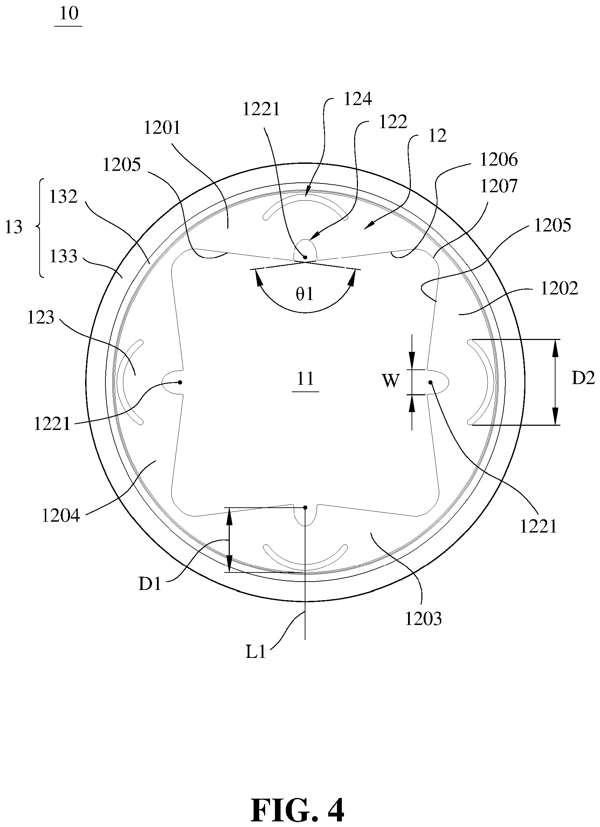

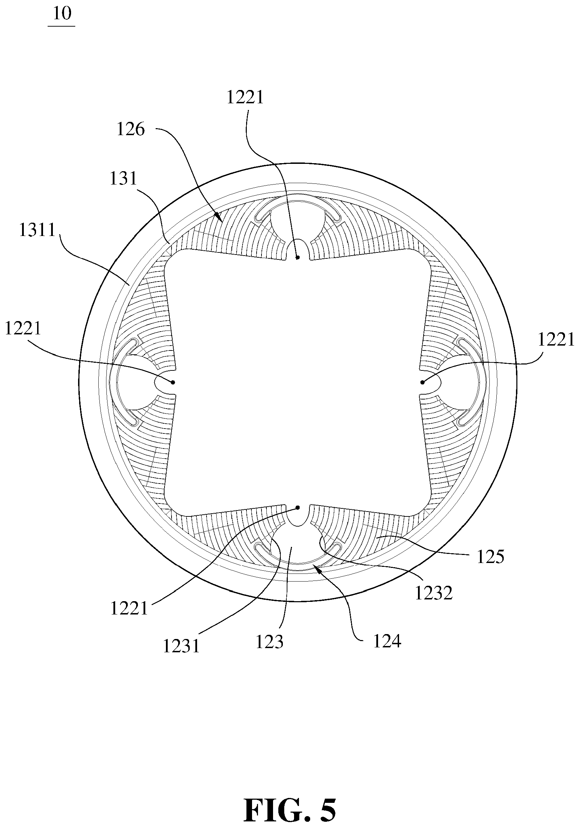

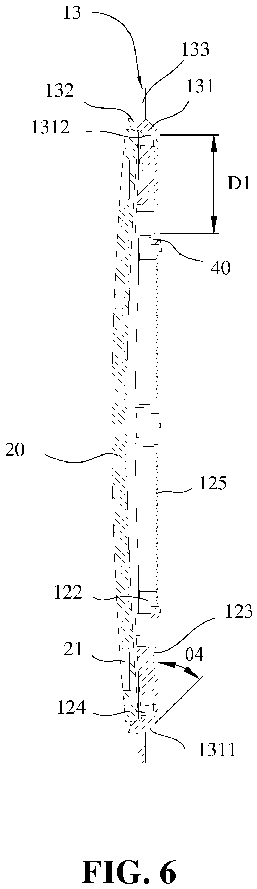

Referring to Fig. 3 to Fig. 6, Fig. 3 is a schematic view of the circular light-guiding structure 10 according to an embodiment of the present invention, Fig. 4 is a top view of the circular light-guiding structure 10 according to an embodiment of the present invention, Fig. 5 is a bottom view of the circular light-guiding structure 10 according to an embodiment of the present invention, and Fig. 6 is a cross-sectional view of the top cover 20 and the circular light-guiding structure 10 according to an embodiment of the present invention. The circular light-guiding structure 10 comprises a hollow-out portion 11, a light-guiding portion 12 and a light circle 13.

The light-guiding portion 12 is disposed on an outer peripheral side of the hollow-out portion 11 in a surrounding manner. In other words, the hollow-out portion 11 is formed by the inner peripheral side 121 of the light-guiding portion 12.

The light-guiding portion 12 has light transmissibility. More specifically, the light-guiding portion 12 is made of light transmissive material and with a certain light transmittance. The light transmittance represents the capability of the light penetrating the medium material, and the defined as the ratio between the flux penetrating the transparent or translucent material to the incident flux. The light transmissive material suitable as the light-guiding portion 12 comprises at least an organic polymer light-transmitting material such as, polymethyl methacrylate (PMMA), polystyrene (PS), polycarbonate (PC), polybisallyl diglycol carbonate (CR-39), styrene acrylonitrile copolymer (SAN), poly 4-methylpentene-1 (TPX), and transparent polyamide.

The light-guiding portion 12 comprises at least three light source receiving slots 122, at least three trenches 124 and a plurality of microstructures 125. The at least three light source receiving slots 122 are arranged at intervals at the inner peripheral side 121 of the light-guiding portion 12 and in communication with the hollow-out portion 11. Each light source receiving slot 122 has a light source disposition position 1221. The at least three trenches 124 are respectively disposed outside the at least three light source receiving slots 124. The plurality of microstructures 125 is disposed in a protruding manner from bottom surface of the light-guiding portion 12. In a preferred embodiment of the present invention, the light-guiding portion 12 further comprises at least three platforms 123, and the at least three platforms 123 are respectively disposed on a side of the at least three light source receiving slots 122 away from the hollow-out portion 11. The top surface and the bottom surface of the at least three platforms 123 are both planar, and the at least three trenches 124 are respectively disposed on a side of the at least three platforms 123 away from the at least three light source receiving slots 122.

According to the claimed invention, the light circle 13 has light transmissibility and comprises a light-reflecting portion 131, a light-emitting portion 132, and a positioning portion 133. The light-reflecting portion 131 disposed around an outer peripheral side of the light-guiding portion 12 and has a light-reflecting surface 1311. The light-emitting portion 132 is disposed above the light-reflecting portion 131. The positioning portion 133 surrounds an outer peripheral side of an intersection of the light-reflecting portion 131 and the light-emitting portion 132 of the light circle 13. More specifically, the light circle 13 and the light-guiding portion 12 are made of the same light transmissive material monolithically, and have a certain light transmittance.

As shown in Fig. 1, Fig. 2 and fig. 6, the top cover 20 is disposed above the light-guiding portion 12 of the circular light-guiding structure 10 and has opacity. In a preferred embodiment, the top surface of the top cover 20 is marked with at least three touch function symbols 21, and the at least three touch function symbols 21 are located above the at least three platforms 123.

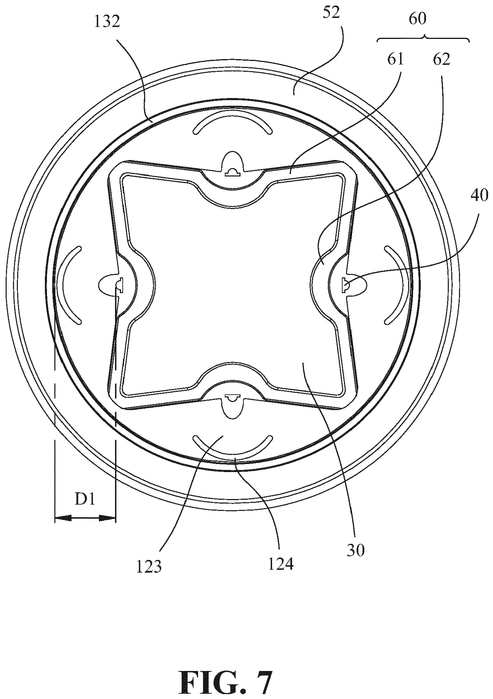

As shown in Fig. 2 and Fig. 7, the substrate 30 is located below the circular light-guiding structure 10 and comprises at least three touch portions (not shown). The at least three touch portions are located below the at least three platforms 123. When a user's finger touches one of the touch function symbols 21 on the top surface of the top cover 20, and an input signal is received by the platform 123 located below the touch function symbol 21 and transmitted to the touch portion located under the platform 123. The touch operation mode corresponding to the touch function symbol 21 is achieved.

As shown in Fig. 2 and Fig. 7, the at least three light-emitting diodes 40 are disposed on the top surface of the substrate 30 and are respectively located on the light source disposition positions 1221 of the at least three light source receiving slots 122.

As shown in Fig. 1 and Fig. 2, the outer cover 50 is opaque and comprises a side wall 51 and a top wall 52. The side wall 51 and the top wall 52 of the outer cover 50 together form an accommodating space 53, the top wall 52 of the outer cover 50 forms an opening 54, and the opening 54 communicates with the accommodating space 53. The circular light-guiding structure 10, the top cover 20 and the substrate 30 are all located in the accommodating space 53; bottom surface of the top wall 52 of the outer cover 50 abuts against top surface of the positioning portion 133 of the circular light-guiding structure 10, and top surface of the light-emitting portion 132 of the light circle 13 of the circular light-guiding structure 10 and top surface of the top cover 20 are exposed to the opening 54.

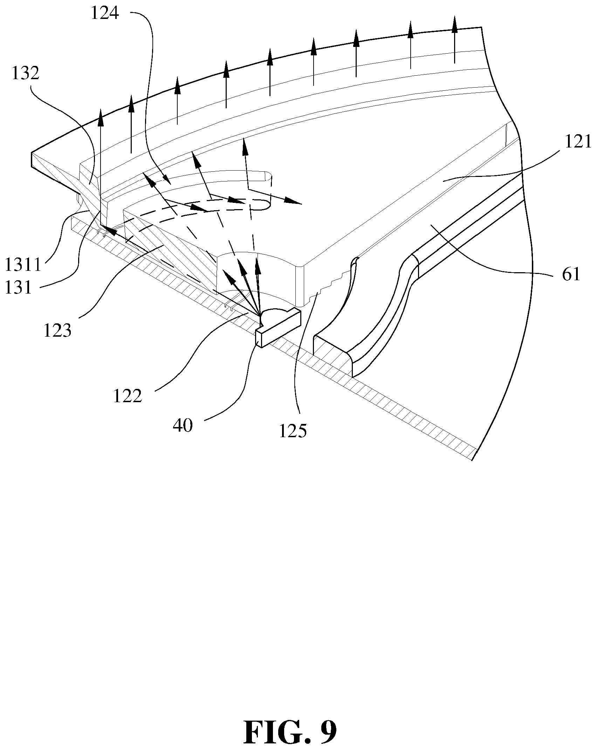

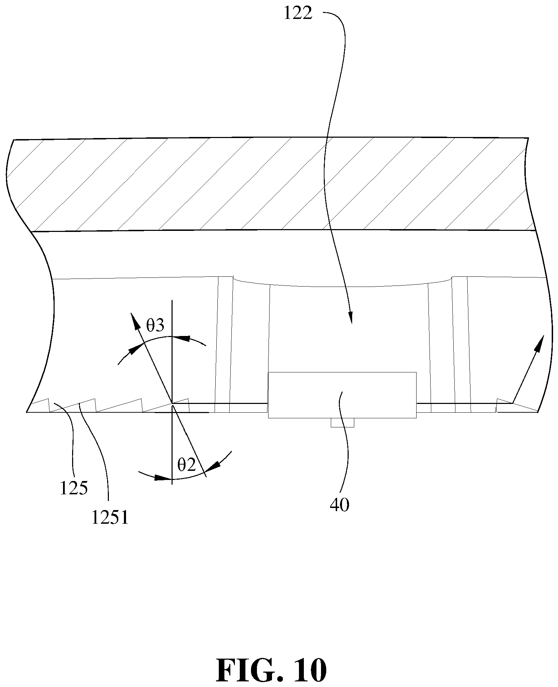

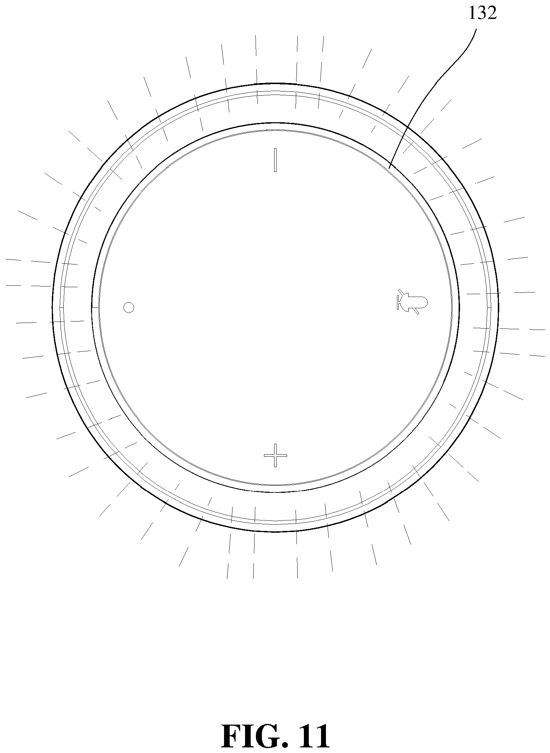

Referring to Fig. 8, Fig. 9 and Fig. 10, Fig. 8 is a planar schematic view of the light path according to an embodiment of the present invention, Fig. 9 is a cross-sectional view of the light path according to an embodiment of the present invention, and Fig. 10 is a schematic view of the light refracted by the microstructures 125 according to an embodiment of the present invention. After the at least three light-emitting diodes 40 are turned on, the at least three light-emitting diodes 40 emit a plurality of light beams, and the plurality of light beams are respectively projected into the at least three platforms 123 through the at least three light source receiving slots 122 and the microstructures 125 around therein. Among the light projected into the at least three platforms 123, a part of the light is directly projected into the at least three trenches 124 after penetrating the at least three platforms 123, and a part of the light after passing through the at least three platforms 123 penetrates the microstructures 125 at the periphery of the at least three platforms 123 and then is projected into the at least three trenches 124. After the light projected into the at least three trenches 124 contacts the trench walls of the side of the at least three trenches 124 near the light-reflecting portion 131 of the light circle 13, a part of the light directly passes through the trench walls of the side of the at least three trenches 124 near the light-reflecting portion 131 of the light circle 13 and is projected into the light-reflecting portion 131 of the light circle 13, and a part of the light is reflected by the trench walls of the side of the at least three trenches 124 near the light-reflecting portion 131 of the light circle 13 and is projected in the direction of the microstructures 125. The light that is in contact with the microstructures 125 is refracted by the microstructures 125 to change the projection direction so that the light that contacts the microstructures 125 produces a uniform scattering phenomenon within the light-guiding portion 12, thereby allowing the light contacting the microstructures 125 to be uniformly projected into the light-reflecting portion 131 of the light circle 13. Therefore, all the light beams emitted from the at least three light-emitting diodes 40 are uniformly projected into the entire light-reflecting portion 131 of the light circle 13 after passing through the light-guiding portion 12. All of the light projected onto the entire light-reflecting portion 131 of the light circle 13 is projected on the light-reflecting surface 1311 of the light reflecting portion 131, and all the light is reflected by the light-reflecting surface 1311 of the light-reflecting portion 131 to change the projection direction toward the top surface of the light-emitting portion 132. As shown in Fig. 11, all of the light emitted from the at least three light-emitting diodes 40 can be uniformly projected from the top surface of the light-emitting portion 132. Therefore, in the case where a small number of light-emitting diodes 40 are used, the light-emitting portion 132 of the entire light circle 13 can emit light uniformly, so as to effectively reduce the number of the light-emitting diodes 40 and the cost, save power and increase the available area of the substrate 30.

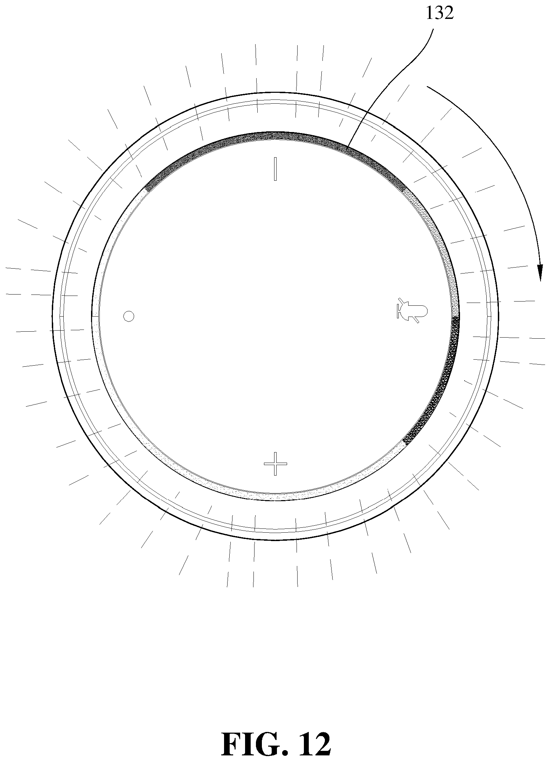

Referring to Fig. 12, Fig. 12 is a schematic view of the plurality of light-emitting diodes emitting light sequentially according to an embodiment of the present invention. The at least three light-emitting diodes 40 can be sequentially turned on, so that the light-emitting portion 132 of the light circle 13 can exhibit an effect wherein the light circle 13 is illuminated along the circumferential direction one section by one section.

In the preferred embodiment of the present invention, as shown in Fig. 4, the minimum distance D1 of the light source disposition position 1221 of each light source receiving slot 122 to an inner peripheral side 1312 of the light-reflecting portion 131 is greater than or equal to 10 mm. In other words, as shown in Fig. 6 and Fig. 7, the minimum distance D1 from the front end of each of the light-emitting diodes 40 to the inner peripheral side 1312 of the light reflecting portion 131 is greater than or equal to 10 mm, so that the area of the light-guiding portion 12 can be greatly reduced and the area of the hollow-out portion 11 is further increased. Since the usable area of the substrate 30 depends on the area of the substrate 30 exposed to the hollow-out portion 11, the available area of the substrate 30 is greatly increased in the case where the area of the hollow-out portion 11 is increased.

According to the claimed invention, as shown in Fig. 3, Fig. 4, and Fig. 5, the light source disposition position 1221 of each light source receiving slot 122, the intermediate position of the longitudinal direction of each trench 124, and the position of the minimum distance of the inner peripheral side 1312 of the light-reflection portion 131 are located on the same straight line L1. According to the claimed invention, the light-guiding portion 12 comprises four light source receiving slots 122, four platforms 123 and four trenches 124. The substrate 30 has four touch portions (not shown), and the light-guiding device comprises four light-emitting diodes 40. The light-guiding portion 12 is divided into four light-guiding regions 1201-1204, and the inner peripheral side of each of the light-guiding regions 1201-1204 has two planes 1205, 1206, and the two planes 1205, 1206 of each of the light-guiding regions 1201-1204 are respectively connected to the walls of a light source receiving slot 122. and the two planes 1205, 1206 of each light-guiding region 1201-1204 are respectively connected with slot wall of one of the light source receiving slots 122, and the two planes 1205, 1206 of each light-guiding region 1201-1204 extend in the longitudinal direction and form an angle Θ1 at intersection, the angles of the four angles Θ1 are equal and between 165° and 180°, and the adjacent two light-guiding regions 1201-1204 form a rounded corner 1207 between the two planes 1205, 1206. Accordingly, the light emitted by each of the light-emitting diodes 40 can be uniformly scattered not only in the range of the light-guiding regions 1201-1204, but also the light emitted from the adjacent two light-emitting diodes 40 can be evenly distributed to the intersection of the adjacent two light-guiding regions 1201-1204. As such, all the light emitted from the four light-emitting diodes 40 can be uniformly projected into the light-reflecting portion 131 of the light circle 13. In particular, when the angles of the four angles Θ1 are all equal to 165°, the present invention can minimize the area of the light-guiding portion 12 and maximize the area of the hollow-out portion 11 while maintaining the above-described effects. Since the usable area of the substrate 30 depends on the area of the substrate 30 exposed to the hollow-out portion 11, the available area of the substrate 30 is maximized in the case where the area of the hollow-out portion 11 is maximized.

According to the claimed invention, the direct distance D2 of the two ends of each trench 124 is greater than the width W of each of the light source receiving slot 122.

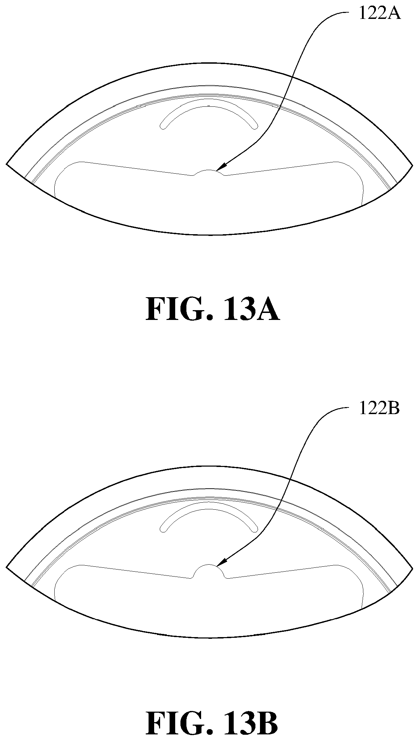

In the preferred embodiment of the present invention, as shown in Fig. 4, each of the light source receiving slot 122 has a semi-elliptical shape. In a variation of the present invention, as shown in Fig. 13A, the shape of each of the light source receiving slots 122A may also be curved. In another variation of the present invention, as shown in Fig. 13B, each of the light source receiving slots 122B may have a semicircular shape. Whether the shape is semi-elliptical, curved or semi-circular, the walls of each of the light source receiving slots 122, 122A, 122B are arcuate, which can effectively expand the range of light scattering. Accordingly, the light emitted from each of the light-emitting diodes 40 can be widely scattered into the light-guiding portion 12 after coming into contact with the curved walls of the respective light source receiving slots 122, 122A, and 122B.

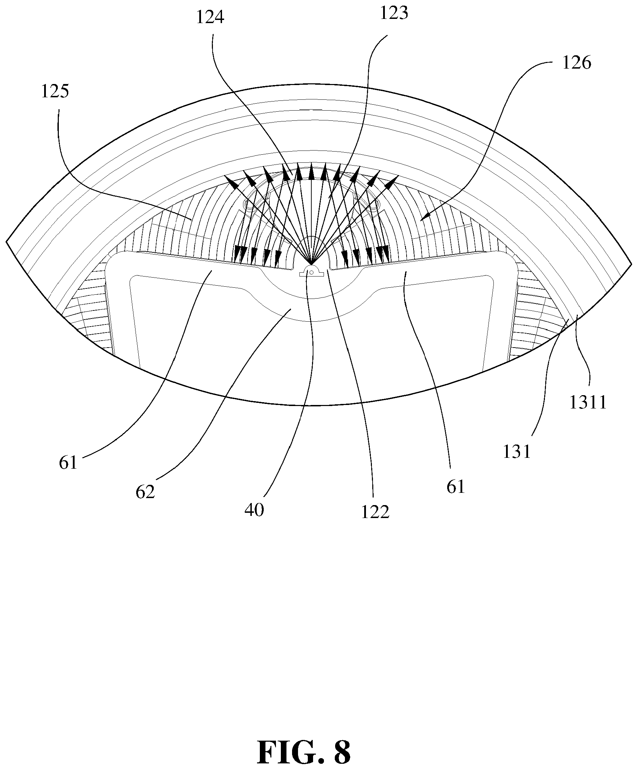

In the preferred embodiment of the present invention, as shown in Fig. 5 and Fig. 8, the two sides 1231 and 1232 of the platform 123 and the microstructures 125 are respectively curved, which correspond to the outlines of the touch portion of the substrate 30 to maintain a good touch sensing effect.

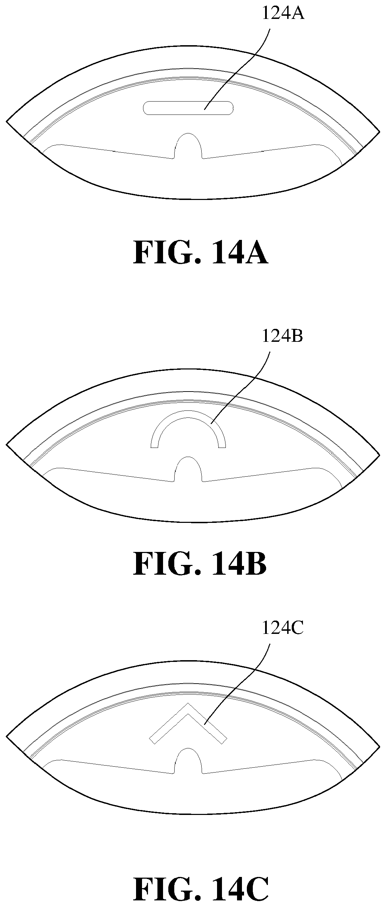

In the preferred embodiment of the present invention, as shown in Fig. 3, Fig. 4, Fig. 5, the shape of each trench 124 is arcuate. In a variation of the present invention, as shown in Fig. 14A, each of the trenches 124A may have an elongated shape. In another variation of the present invention, as shown in Fig. 14B, each of the trenches 124B may have a U-shape. In yet another variation of the present invention, as shown in Fig. 14C, each of the trenches 124C may have a V-shape.

In the preferred embodiment of the present invention, as shown in Fig. 10, one side of each of the microstructures 125 adjacent to the light source receiving slots 122 is defined as a light incident side 1251, and the angle Θ 2 between the light incident side 1251 and the normal of bottom surface of the light-guiding portion 12 is between 10° and 60°. Thereby, after the light is in contact with the light incident side 1251, the refraction angle Θ3 changes the projection direction at an angle of 10 to 60 degrees, and the light is effectively diffused, so that the light contacting the microstructures 125 is generating a uniform scattering phenomenon inside the light-guiding portion 12. As such, the light contacting the microstructures 125 is uniformly projected into the light-reflecting portion 131 of the light circle 13.

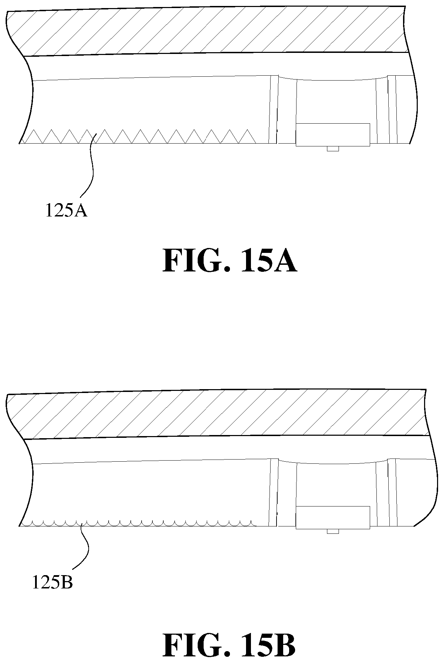

In the preferred embodiment of the present invention, as shown in Fig. 6 and Fig. 10, the longitudinal cross-section of each microstructure 125 has a shape of acute triangle. In a variation of the present invention, as shown in Fig. 15A, the longitudinal cross-section of each microstructure 125A is an isosceles triangle. In another variation of the present invention, as shown in Fig. 15B, the longitudinal cross-section of each microstructure 125B may also have a semi-circular shape.

According to the claimed invention, as shown in Fig. 5 and Fig. 8, the microstructures 125 are divided into four sets of microstructure assembly 126, each set of microstructure assembly 126 comprises a plurality of microstructures 125. According to the claimed invention, a part of the microstructures 125 of each set of microstructure assembly 126 are curved concentric structures with different radii centered on the light source disposition position 1221 of each light source receiving slot 122. In other words, a plurality of microstructures 125 of each set of microstructure assembly 126 are sequentially disposed from the respective light source receiving slot 122 to the light circle 13 and surround the respective light source receiving slot 122. Preferably, a plurality of microstructures 125 in each set of microstructure assembly 126 are arcuate.

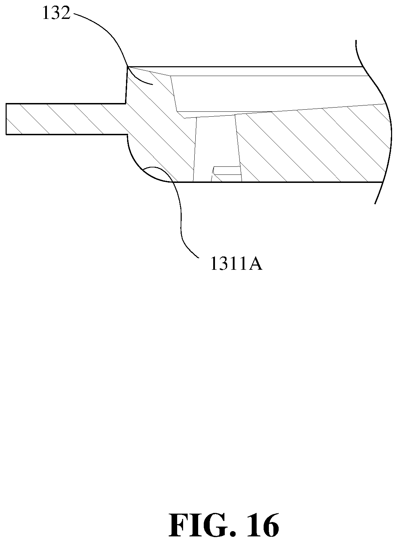

In the preferred embodiment of the present invention, as shown in Fig. 6, the light-reflecting surface 1311 of the light circle 13 is actually a chamfer. Therefore, the angle Θ4 of the light-reflecting surface 1311 with respect to the bottom surface of the light-guiding portion 12 is between 0° and 90°. Wherein, the reflection effect of 45° is optimal because the light-reflecting surface 1311 at this angle can change the reflection path of the light into a "straight line" through the top surface of the light-emitting portion 132. In a variation of the present invention, as shown in Fig. 16, the light-reflecting surface 1311A may also be a rounded corner; when the light is disposed to be projected at the center of the light-reflecting surface 1311A, the rounded light-reflecting surface 1311A may happen to change the reflection projection path to "straight up" through the top surface of the light-emitting portion 132.

As shown in Fig. 2 and Fig. 7,the light-guiding device further comprises a light-shielding member 60 disposed on the substrate 30, located in the hollow-out portion 11 of the circular light-guiding structure 10, and having at least three light-shielding portions 61 and at least three connecting portions 62. Each of the light-shielding portions 61 is adjacent to the inner peripheral side 121 of the light-guiding portion 12 between two adjacent light source receiving slots 122 of the circular light-guiding structure 10, and each connecting portion 62 bypasses one of the light-emitting diodes 40, and the two ends of the connecting portions 62 are respectively connected to one end of two adjacent light-shielding portions 61. In the preferred embodiment of the present invention, each of the light-shielding portions 61 is disposed with a fixing hole (not shown), and the light-guiding device further comprises at least three fasteners (not shown) respectively passing through the fixing holes of the at least three light-shielding portions 61 and being locked to the substrate 30. As such, the light-shielding member 60 is fixed to the substrate 30.

As shown in Fig. 8 and Fig. 9, a part of reflected or refracted light is reflected by the at least three light-shielding portions 61 back to the inside of the light-guiding portion 12 after passing through the inner peripheral side 121 of the light-guiding portion 12. Then, the light is projected into the light-reflecting portion 131 of the light circle 13. Therefore, the light-shielding member 60 can provide a good light-shielding effect, reduce the loss of light, and further increase the brightness of the light-emitting portion 132 of the light circle 13.

In the preferred embodiment of the present invention, as shown in Fig. 9, the height of the light-shielding member 60 relative to the substrate 30 is greater than the height of each of the light-emitting diodes 40 relative to the substrate 30. In other words, a part of the reflected or refracted light does not exceed the height of the light-shielding member 60 after passing through the inner peripheral side 121 of the light-guiding portion 12, so that the light is totally reflected back to the inside of the light-guiding portion 12, and the light-shielding efficiency is high, the light loss is reduced, and the brightness of the light-emitting portion 132 of the light circle 13 is brighter.

To enhance the light-reflecting effect of the light-shielding member 60, a light-reflecting layer (not shown) is disposed on an outer peripheral side of the light-shielding member 60. After passing through the inner peripheral side 121 of the light-guiding portion 12, a part of the reflected or refracted light is totally reflected back to the inside of the light-guiding portion 12 by the light-reflecting layer, and then projected into the light-reflecting portion 131 of the light circle 13, which has the best not only achieves excellent light-shielding effect, but also achieves remarkable result in reducing light loss, as well as increasing the brightness of the light-emitting portion 132 of the light circle 13.

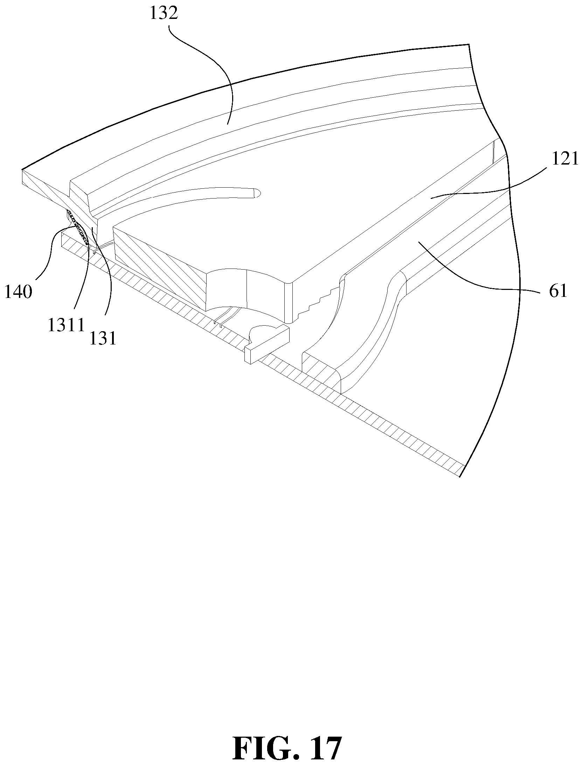

Referring to Fig. 17, Fig. 17 is a schematic view according to another embodiment of the present invention. In another embodiment of the present invention, in addition to the light-shielding effect provided by the light-shielding member 60 provides, an outer peripheral side of the light-reflecting portion 131 of the light circle 13 (i.e., the opposite side of the light-reflecting surface 1311) may be disposed with a light-shielding layer 140 to provide a good light-shielding effect so that the light-reflecting surface 1311 can totally reflect the light and change the projection direction toward the top surface of the light-emitting portion 132. With the light-shielding layer 140 on the outer peripheral side of the light-reflecting portion 131 of the light circle 13 in combination with the light-shielding member 60, the light-shielding effect is further enhanced, and the effect of reducing light loss is more remarkable, and the light-emitting portion 132 of the light circle 13 is brighter.

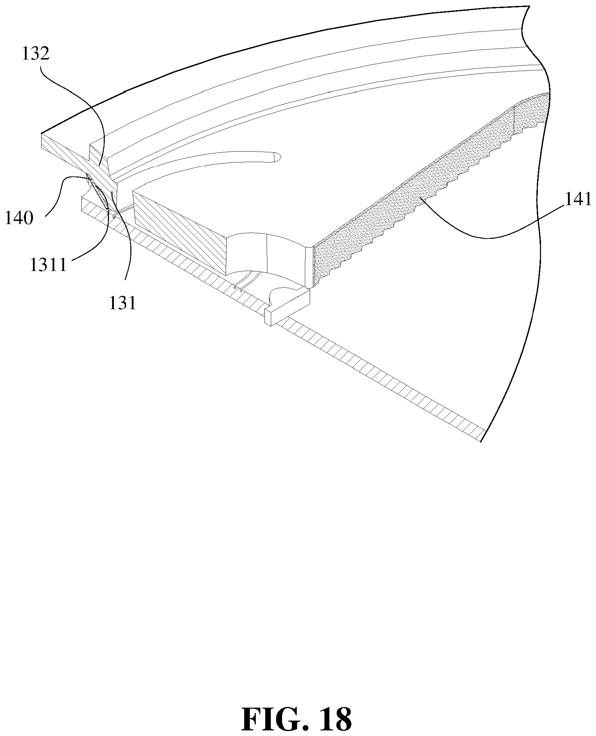

Referring to Fig. 18, Fig. 18 is a schematic view according to yet another embodiment of the present invention. In the present embodiment, a light-shielding layer 141 is disposed on the inner peripheral side 121 of the light-guiding portion 12 to achieve the same effect of the light-shielding member 60. Therefore, the light-shielding member 60 is saved in the present embodiment. The outer peripheral side of the light-reflecting portion 131 of the light circle 13 (i.e., the opposite side of the light-reflecting surface 1311) may be disposed with a light-shielding layer 140 to provide a good light-shielding effect so that the light-reflecting surface 1311 can totally reflect the light and change the projection direction toward the top surface of the light-emitting portion 132. With the light-shielding layer 140 on the outer peripheral side of the light-reflecting portion 131 of the light circle 13 in combination with the light-shielding layer 141 disposed on the inner peripheral side 121 of the light-guiding portion 12, the light-shielding effect is further enhanced, and the effect of reducing light loss is more remarkable, and the light-emitting portion 132 of the light circle 13 is brighter.

In summary, the present invention can effectively disperse the central excess light to both sides by the trenches 124 of the light-guiding portion 12, and the microstructures 125 effectively diffuse the light and uniformly scatter inside the light-guiding portion 12, thereby in the case of being able to use only three or four light-emitting diodes 40, the light-emitting portion 132 of the entire light circle 13 can emit light uniformly, to effectively achieve reducing the number of the light-emitting diodes 40 and the cost, saving power, as well as increasing the available area on the substrate 30.

Next, the present invention can reduce the area of the light-guiding portion 12 and increase the area of the hollow-out portion 11 by limiting the minimum distance D1 of each of the light-emitting diodes 40 to the inner peripheral side 1312 of the light-reflecting portion 131 to be greater than or equal to 10 mm, resulting in indirectly increasing the available area on the substrate 30.

Furthermore, the angle Θ1 between the two planes 1205, 1206 of the light-guiding regions 1201-1204 is limited to between 165° and 180°, so that the light is evenly scattered throughout the light-guiding portion 12 (including all the light-guides regions 1201-1204 and the intersections) to ensure that all the light is uniformly projected into the light-reflecting portion 131 of the light circle 13. When the angle of the angle Θ1 is limited to 165°, the available area on the substrate 30 can also be indirectly maximized.

In addition, the semi-elliptical, curved or semi-circular light source receiving slots 122, 122A, 122B have a curved arc-shaped wall capable of scattering light into the light guiding-portion 12 in a wide range.

Moreover, the two sides of the platform 123 correspond to the contour of the touch portion of the substrate 30, thereby maintaining a good touch sensing effect.

In addition, the angle Θ2 between the light incident side 1251 of each microstructure 125 and the normal of the bottom surface of the light-guide portion 12 is limited to 10° to 60°, resulting in a better effect of diffusing light, and the light is more uniformly scattered inside the light-guiding portion 12, so that the light is uniformly projected into the light-reflecting portion 131 of the light circle 13.

Furthermore, the light-reflecting surfaces 1311, 1311A, either chamfered or rounded, may reflect the light well and project upward through the top surface of the light-emitting portion 132.

It is important that the light-shielding member 60 or the light-shielding layer 141 on the inner peripheral side 121 of the light-guiding portion 12 can provide a good light-shielding effect, reduce the light loss, and further increase the brightness of the light-emitting portion 132 of the light circle 13. The light-shielding member 60 or the light-shielding layer 141 of the light-guiding portion 12 is further accompanied by a light-shielding layer 140 on the outer peripheral side of the light-reflecting portion 131 of the light circle 13, to achieve even better light-shielding effect, as well as reducing light loss remarkably, and the higher brightness of the light-emitting portion 132 of the light circle 13.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A circular light-guiding structure (10), comprising:
a hollow-out portion (11); and
a light-guiding portion (12), the light-guiding portion (12) being disposed on an outer peripheral side of the hollow-out portion (11), having light transmissibility, and comprising four light source receiving slots (122) and four trenches (124) and a plurality of microstructures (125), and the four light source receiving slots (122) are arranged at intervals at an inner peripheral side (121) of the light-guiding portion (12) and in communication with the hollow-out portion (11), each light source receiving slot (122) having a light source disposition position (1221), and the four trenches (124) being respectively disposed outside the four light source receiving slots (122), a direct distance (D2) between two ends of each trench (124) being greater than width (W) of each light source receiving slot (122), and the microstructures (125) being disposed in a protruding manner from bottom surface of the light-guiding portion (12); wherein the microstructures (125) are divided into four sets of microstructure assembly (126), each set of microstructure assembly (126) comprises a plurality of microstructures (125), and a part of microstructures (125) of each set of microstructure assembly (126) are curved concentric structures with different radii centered on the light source disposition position (1221) of each light source receiving slot (122);
a light circle (13), the light circle (13) having light transmissibility and comprising a light-reflecting portion (131) and a light-emitting portion (132); the light-reflecting portion (131) being disposed around an outer peripheral side of the light-guiding portion (12) and having a light-reflecting surface (1311), and the light-emitting portion (132) being disposed above the light-reflecting portion (131);
wherein the light source disposition position (1221) of each light source receiving slot (122), an intermediate position of a longitudinal direction of each trench (124) and a position of a minimum distance of an inner peripheral side (1312) of the light-reflecting portion (131) are on the same straight line (L1);
and wherein the light-guiding portion (12) is partitioned into four light-guiding regions (1201-1204), and one inner peripheral side of each light-guiding region (1201-1204) has two planes (1205, 1206), and the two planes (1205, 1206) of each light-guiding region (1201-1204) are respectively connected with a slot wall of one of the light source receiving slots (122), and the two planes (1205, 1206) of each light-guiding region (1201-1204) extend in a longitudinal direction and form an angle (Θ1) at intersection, the angles of the four angles (Θ1) are equal and between 165° and 180°, and the adjacent two light-guiding regions (1201-1204) form a rounded corner (1207) between the two planes (1205, 1206).

2. The circular light-guiding structure (10) according to claim 1, wherein the side of each of the microstructures (125) adjacent to each of the light source receiving slots (122) being defined as a light incident side (1251), and an angle (Θ 2) between the light incident side (1251)and the normal of bottom surface of the light-guiding portion (12) being between 10° and 60°; the longitudinal cross-section of each microstructure (125) having a triangular or semi-circular shape.

3. The circular light-guiding structure (10) according to claim 1, wherein a minimum distance (D1) of the light source disposition position (1221) of each light source receiving slot (122) to the inner peripheral side (1312) of the light-reflecting portion (131) is greater than or equal to 10 mm.

4. The circular light-guiding structure (10) according to claim 1, wherein each of the light source receiving slot (122, 122A, 122B) has a semi-elliptical shape, a curved shape or a semi-circular shape; each of the trenches (124, 124A, 124B, 124C) has an arc shape, an elongated shape, a U shape or a V shape.

5. A light-guiding device comprising the circular light-guiding structure (10) according to claim 1, further comprising:
a top cover (20), the top cover (20) being disposed above the light-guiding portion (12) of the circular light-guiding structure (10) and being opaque;
a substrate (30), the substrate (30) being disposed below the circular light-guiding structure (10); and
at least three light-emitting diodes (40), the at least three light-emitting diodes (40) being disposed on a top surface of the substrate (30), and respectively located at light source disposition positions (1221) of the at least three light source receiving slots (122).

6. The light-guiding device according to claim 5, wherein the light-guiding device further comprises a light-shielding member (60) disposed on the substrate (30), located in the hollow-out portion (11) of the circular light-guiding structure (10), and having at least three light-shielding portions (61) and at least three connecting portions (62); each of the light-shielding portions (61) is adjacent to the inner peripheral side (121) of the light-guiding portion (12) between two adjacent light source receiving slots (122) of the circular light-guiding structure (10), and each connecting portion (62) bypasses one of the light-emitting diodes (40), and the two ends of the connecting portions (62) are respectively connected to one end of two adjacent light-shielding portions (61).

7. The light-guiding device according to claim 6, wherein a light-reflecting layer is disposed on an outer peripheral side of the light-shielding member (60).

## Patentansprüche

1. Eine kreisförmige lichtleitende Struktur (10), umfassend:
einen ausgehöhlten Abschnitt (11); und
einen lichtleitenden Abschnitt (12), wobei der lichtleitende Abschnitt (12) an einer äußeren Umfangsseite des ausgehöhlten Abschnitts (11) angeordnet ist, Lichtdurchlässigkeit aufweist und vier Lichtquellenaufnahmeschlitze (122) und vier Gräben (124) und eine Vielzahl von Mikrostrukturen (125) umfasst, und die vier Lichtquellenaufnahmeschlitze (122) in Abständen an einer inneren Umfangsseite (121) des lichtleitenden Abschnitts (12) und in Verbindung mit dem ausgehöhlten Abschnitt (11) angeordnet sind, jeder Lichtquellenaufnahmeschlitz (122) eine Lichtquellenanordnungs-position (1221) aufweist und die vier Gräben (124) jeweils außerhalb der vier Lichtquellenaufnahmeschlitze (122) angeordnet sind, wobei ein direkter Abstand (D2) zwischen zwei Enden jedes Grabens (124) größer als die Breite (W) jedes Lichtquellenaufnahmeschlitzes (122) ist und die Mikrostrukturen (125) in einer vorstehenden Weise von der Bodenfläche des lichtleitende Abschnitts (12) angeordnet sind; wobei die Mikrostrukturen (125) in vier Sätze von Mikrostrukturanordnungen (126) unterteilt sind, jeder Satz von Mikrostrukturanordnungen (126) eine Vielzahl von Mikrostrukturen (125) umfasst, und ein Teil der Mikrostrukturen (125) jedes Satzes von Mikrostrukturanordnungen (126) gekrümmte konzentrische Strukturen mit unterschiedlichen Radien sind, die auf der Lichtquellenanordnungsposition (1221) jedes Lichtquellenaufnahmeschlitzes (122) zentriert sind;
einen Lichtkreis (13), wobei der Lichtkreis (13) lichtdurchlässig ist und einen lichtreflektierenden Abschnitt (131) und einen lichtemittierenden Abschnitt (132) aufweist; wobei der lichtreflektierende Abschnitt (131) um eine äußere Umfangsseite des lichtleitenden Abschnitts (12) herum angeordnet ist und eine lichtreflektierende Oberfläche (1311) aufweist, und wobei der lichtemittierende Abschnitt (132) oberhalb des lichtreflektierenden Abschnitts (131) angeordnet ist;
wobei die Lichtquellenanordnungsposition (1221) jedes Lichtquellen-aufnahmeschlitzes (122), eine Zwischenposition einer Längsrichtung jedes Grabens (124) und eine Position eines Mindestabstands einer inneren Umfangsseite (1312) des lichtreflektierenden Abschnitts (131) auf derselben geraden Linie (L1) liegen;
und wobei der lichtleitende Abschnitt (12) in vier lichtleitende Bereiche (1201-1204) unterteilt ist, und eine innere Umfangsseite jedes lichtleitenden Bereichs (1201-1204) zwei Ebenen (1205, 1206) aufweist, und die zwei Ebenen (1205, 1206) jedes lichtleitenden Bereichs (1201-1204) jeweils mit einer Schlitzwand eines der Lichtquellenaufnahmeschlitze (122) verbunden sind, und die beiden Ebenen (1205, 1206) jedes lichtleitenden Bereichs (1201-1204) sich in einer Längsrichtung erstrecken und am Schnittpunkt einen Winkel (Θ) bilden, die Winkel der vier Winkel (Θ1) gleich sind und zwischen 165° und 180° liegen, und die beiden benachbarten lichtleitenden Bereiche (1201-1204) eine abgerundete Ecke (1207) zwischen den beiden Ebenen (1205, 1206) bilden.

2. Kreisförmige lichtleitende Struktur (10) nach Anspruch 1, wobei die Seite jeder der Mikrostrukturen (125), die an jeden der Lichtquellenaufnahme-schlitze (122) angrenzt, als Lichteinfallsseite (1251) definiert ist und ein Winkel (0 2) zwischen der Lichteinfallsseite (1251) und der Normalen der Bodenfläche des lichtleitende Abschnitts (12) zwischen 10° und 60° beträgt; wobei der Längsquerschnitt jeder Mikrostruktur (125) eine dreieckige oder halbkreisförmige Form aufweist.

3. Kreisförmige lichtleitende Struktur (10) nach Anspruch 1, wobei ein Mindestabstand (D1) der Lichtquellenanordnungsposition (1221) jedes Lichtquellenaufnahmeschlitzes (122) zur inneren Umfangsseite (1312) des lichtreflektierenden Abschnitts (131) größer oder gleich 10 mm ist.

4. Kreisförmige lichtleitende Struktur (10) nach Anspruch 1, wobei jeder der Lichtquellenaufnahmeschlitze (122, 122A, 122B) eine halbelliptische Form, eine gekrümmte Form oder eine halbkreisförmige Form hat; jeder der Gräben (124, 124A, 124B, 124C) hat eine Bogenform, eine längliche Form, eine U-Form oder eine V-Form.

5. Lichtleitende Vorrichtung, die die kreisförmige lichtleitende Struktur (10) nach Anspruch 1 umfasst, ferner umfassend:
eine obere Abdeckung (20), wobei die obere Abdeckung (20) oberhalb des lichtleitenden Abschnitts (12) der kreisförmigen lichtleitenden Struktur (10) angeordnet und undurchsichtig ist;
ein Substrat (30), wobei das Substrat (30) unterhalb der kreisförmigen lichtleitenden Struktur (10) angeordnet ist; und
mindestens drei lichtemittierende Dioden (40), wobei die mindestens drei lichtemittierenden Dioden (40) auf einer oberen Oberfläche des Substrats (30) angeordnet sind und sich jeweils an Lichtquellenanordnungspositionen (1221) der mindestens drei Lichtquellenaufnahmeschlitze (122) befinden.

6. Lichtleitende Vorrichtung nach Anspruch 5, wobei die lichtleitende Vorrichtung ferner ein Lichtabschirmelement (60) umfasst, das auf dem Substrat (30) angeordnet ist, sich in dem ausgehöhlten Abschnitt (11) der kreisförmigen lichtleitende Struktur (10) befindet und mindestens drei Lichtabschirmabschnitte (61) und mindestens drei Verbindungsabschnitte (62) aufweist; jeder der Lichtabschirmabschnitte (61) an die innere Umfangsseite (121) des lichtleitenden Abschnitts (12) zwischen zwei benachbarten Lichtquellenaufnahmeschlitzen (122) der kreisförmigen lichtleitenden Struktur (10) angrenzt, und jeder Verbindungsabschnitt (62) eine der lichtemittierenden Dioden (40) umgeht, und die beiden Enden der Verbindungsabschnitte (62) jeweils mit einem Ende von zwei benachbarten Lichtabschirmabschnitten (61) verbunden sind.

7. Lichtleitende Vorrichtung nach Anspruch 6, wobei eine lichtreflektierende Schicht auf einer äußeren Umfangsseite des Lichtabschirmelements (60) angeordnet ist.

## Revendications

1. Une structure circulaire de guidage de lumière (10), comprenant:
une partie creuse (11); et
une partie de guidage de lumière (12), la partie de guidage de lumière (12) étant disposée sur un côté périphérique extérieur de la partie creuse (11), ayant une transmissibilité de la lumière, et comprenant quatre fentes de réception de source de lumière (122) et quatre tranchées (124) et une pluralité de microstructures (125), et les quatre fentes de réception de source de lumière (122) sont disposées à intervalles sur un côté périphérique intérieur (121) de la partie de guidage de lumière (12) et en communication avec la partie creuse (11), chaque fente de réception de source de lumière (122) ayant une position de disposition de source de lumière (1221), et les quatre tranchées (124) étant respectivement disposées à l'extérieur des quatre fentes de réception de source de lumière (122), une distance directe (D2) entre deux extrémités de chaque tranchée (124) étant supérieure à la largeur (W) de chaque fente de réception de source de lumière (122), et les microstructures (125) étant disposées de manière saillante depuis la surface de fond de la partie de guidage de lumière (12) ; dans lequel les microstructures (125) sont divisées en quatre ensembles d'assemblage de microstructures (126), chaque ensemble d'assemblage de microstructures (126) comprend une pluralité de microstructures (125), et une partie des microstructures (125) de chaque ensemble d'assemblage de microstructures (126) sont des structures concentriques incurvées avec différents rayons centrés sur la position de disposition de la source de lumière (1221) de chaque fente de réception de source de lumière (122);
un cercle lumineux (13), le cercle lumineux (13) ayant une transmissibilité de la lumière et comprenant une partie de réflexion de la lumière (131) et une partie d'émission de la lumière (132) ; la partie de réflexion de la lumière (131) étant disposée autour d'un côté périphérique extérieur de la partie de guidage de lumière (12) et ayant une surface de réflexion de la lumière (1311), et la partie d'émission de la lumière (132) étant disposée au-dessus de la partie de réflexion de la lumière (131);
dans lequel la position de disposition de la source de lumière (1221) de chaque fente de réception de source de lumière (122), une position intermédiaire d'une direction longitudinale de chaque tranchée (124) et une position d'une distance minimale d'un côté périphérique intérieur (1312) de la partie de réflexion de la lumière (131) sont sur la même ligne droite (Ll);
et dans lequel la partie de guidage de lumière (12) est divisée en quatre régions de guidage de lumière (1201-1204), et un côté périphérique intérieur de chaque région de guidage de lumière (1201-1204) a deux plans (1205, 1206), et les deux plans (1205, 1206) de chaque région de guidage de lumière (1201-1204) sont respectivement connectés à une paroi de fente de l'une des fentes de réception de source de lumière (122), et les deux plans (1205, 1206) de chaque région de guidage de lumière (1201-1204) s'étendent dans une direction longitudinale et forment un angle (Θ) à l'intersection, les angles des quatre angles (Θ1) sont égaux et compris entre 165° et 180°, et les deux régions de guidage de lumière adjacentes (1201-1204) forment un coin arrondi (1207) entre les deux plans (1205, 1206).

2. Structure circulaire de guidage de lumière (10) selon la revendication 1, dans laquelle le côté de chacune des microstructures (125) adjacent à chacune des fentes de réception de source de lumière (122) est défini comme un côté d'incidence de lumière (1251), et un angle (0 2) entre le côté d'incidence de lumière (1251) et la normale de la surface de fond de la partie de guidage de lumière (12) est compris entre 10° et 60°; la section transversale longitudinale de chaque microstructure (125) ayant une forme triangulaire ou semi-circulaire.

3. Structure circulaire de guidage de lumière (10) selon la revendication 1, dans laquelle une distance minimale (D1) de la position de disposition de la source de lumière (1221) de chaque fente de réception de source de lumière (122) au côté périphérique intérieur (1312) de la partie de réflexion de la lumière (131) est supérieure ou égale à 10 mm.

4. Structure circulaire de guidage de lumière (10) selon la revendication 1, dans laquelle chacune des fentes de réception de source de lumière (122, 122A, 122B) a une forme semi-elliptique, une forme incurvée ou une forme semi-circulaire; chacune des tranchées (124, 124A, 124B, 124C) a une forme d'arc, une forme allongée, une forme en U ou une forme en V.

5. Dispositif de guidage de lumière comprenant la structure circulaire de guidage de lumière (10) selon la revendication 1, comprenant en outre:
un couvercle supérieur (20), le couvercle supérieur (20) étant disposé au-dessus de la partie de guidage de lumière (12) de la structure circulaire de guidage de lumière (10) et étant opaque;
un substrat (30), le substrat (30) étant disposé en dessous de la structure circulaire de guidage de lumière (10); et
au moins trois diodes électroluminescentes (40), les au moins trois diodes électroluminescentes (40) étant disposées sur une surface supérieure du substrat (30), et situées respectivement à des positions de disposition de source de lumière (1221) des au moins trois fentes de réception de source de lumière (122).

6. Dispositif de guidage de lumière selon la revendication 5, dans lequel le dispositif de guidage de lumière comprend en outre un élément de protection contre la lumière (60) disposé sur le substrat (30), situé dans la partie creuse (11) de la structure circulaire de guidage de lumière (10), et ayant au moins trois parties de protection contre la lumière (61) et au moins trois parties de connexion (62) ; chacune des parties de protection contre la lumière (61) est adjacente au côté périphérique intérieur (121) de la partie de guidage de lumière (12) entre deux fentes de réception de source de lumière adjacentes (122) de la structure circulaire de guidage de lumière (10), et chaque partie de connexion (62) contourne l'une des diodes électroluminescentes (40), et les deux extrémités des parties de connexion (62) sont respectivement connectées à une extrémité de deux parties de protection contre la lumière adjacentes (61).

7. Dispositif de guidage de lumière selon la revendication 6, dans lequel une couche de réflexion de la lumière est disposée sur un côté périphérique extérieur de l'élément de protection contre la lumière (60).
